Europäisches Patentamt

(19) European Patent Office

Office européen des brevets

(11) Numéro de publication: **0 002 543**
**B1**

(12) **FASCICULE DE BREVET EUROPEEN**

(45) Date de publication du fascicule de brevet: **28.10.81**

(51) Int. Cl.³: **C 01 B 15/00, C 02 F 1/72**

(21) Numéro de dépôt: **78200306.5**

(22) Date de dépôt: **15.11.78**

(54) Particules solides contenant du peroxyde de calcium, leur préparation et leur utilisation pour le traitement des eaux.

(30) Priorité: **18.11.77 LU 78545**

(43) Date de publication de la demande:
**27.06.79 Bulletin 79/13**

(45) Mention de la délivrance du brevet:
**28.10.81 Bulletin 81/43**

(84) Etats Contractants Désignés:
**BE CH DE FR GB LU NL SE**

(56) Documents cités:
**AT - B - 33 357**
**DE - B - L 459 IVb/12i**
**DE - B - 1 257 801**
**DE - C - 334 868**
**FR - A - 1 560 450**
**FR - A - 2 215 385**

(73) Titulaire: **INTEROX Société anonyme dite:**
**Rue du Prince Albert, 33**
**B-1050 Bruxelles (BE)**

(72) Inventeur: **Gago, Ignace**
**Chaussée de Nivelles, 53**
**B-1420 Braine-l'Alleud (BE)**

(74) Mandataire: **Eischen, Roland**
**Solvay & Cie Département de la Propriété**
**Industrielle Rue de Ransbeek 310**
**B-1120 Bruxelles (BE)**

Courier Press, Leamington Spa, England.

**0 002 543**

Particules solides contenant du peroxyde de calcium, leur préparation et leur utilisation
pour le traitement des eaux

L'invention concerne des particules solides contenant du peroxyde de calcium. Elle concerne également un procédé pour leur fabrication et leur utilisation pour le traitement des eaux.

Certains composés peroxydés trouvent des débouchés dans le traitement des eaux. Ainsi, il est connu de désinfecter les eaux potables et minérales à l'aide de l'oxygène actif libéré par la décomposition de peroxyde de calcium ou de magnésium au moyen de composés à caractère acide (brevet autrichien 33 357 déposé le 29 août 1904 par A. Krause). Il est également connu de décyanuriser les eaux résiduaires en transformant les cyanures en cyanates à l'intervention de peroxyacides minéraux ou organiques (brevet français 1 560 450 déposé le 16 janvier 1968 au nom de l'Air Liquide). Les peroxyacides mis en oeuvre peuvent être engendrés in situ à partir d'un générateur d'oxygène actif et d'un acide minéral ou d'un dérivé organique choisi parmi les anhydrides, chlorures d'acides, aldéhydes, esters et composés N-acylés. Dans ces procédés connus, les traitements appliqués visent toujours à obtenir une libération de tout l'oxygène actif présent dans le composé peroxydé mis en oeuvre en un temps très court. Les techniques ne conviennent cependant pas lorsqu'on désire obtenir des effets de longue durée.

Le peroxyde de calcium constitue une source d'oxygène actif fort intéressante. Sous forme de solide anhydre, le produit ne se décompose que fort peu sous l'effet de la température. Par contre, en milieu aqueux, il se décompose en libérant de l'oxygène actif. Lorsque le produit se présente sous forme de poudre, cette hydrolyse est particulièrement rapide aux pH inférieurs à 10, ce qui rend le produit inactif quelques minutes à peine après sa mise en contact avec le milieu aqueux. Le produit ne peut de ce fait pas convenir pour l'oxygénation des eaux lorsqu'un effet de longue durée est indispensable. La granulation du produit n'en réduit par ailleurs pas suffisamment la vitesse d'hydrolyse pour en permettre l'utilisation dans le traitement des eaux.

Pour améliorer la stabilité de certains composés peroxydés à l'état solide, on a déjà proposé de les enrober. Ainsi, il est connu d'enrober des particules de persels de métaux alcalins, et plus particulièrement de percarbonate de sodium, au moyen de copolymères du chlorure de vinylidène pour améliorer leur résistance au stockage en atmosphère humide (demande de brevet français 2 215 385 déposée le 28 janvier 1974 au nom d'Interox); les produits ainsi enrobés se désagrègent facilement en milieu aqueux. On a également proposé d'agglomérer des particules de persels et de superoxydes métalliques au moyen de gélatine ou de colle, pour éviter qu'ils ne soient réduits par les autres constituants des compositions médicinales ou cosmétiques dans lesquelles ils sont mis en oeuvre (brevet allemand 334 868 du 1er mai 1919 au nom de H. E. Bergmann). Ces agents d'enrobage ne permettent cependant pas de réduire la vitesse d'hydrolyse en milieu aqueux.

La présente invention résout le problème de fournir des particules solides contenant du peroxyde de calcium dont la vitesse d'hydrolyse en milieu aqueux (c'est-à-dire la vitesse de décomposition en milieu aqueux du peroxyde de calcium pour donner de l'oxygène actif et de l'oxygène moléculaire) est fortement réduite.

La présente invention concerne à cet effet des particules solides contenant du peroxyde de calcium caractérisées en ce qu'elles enrobées au moyen d'un agent d'enrobage contenant un composé solide insoluble dans l'eau ayant un point de fusion d'au moins 50°C.

Dans les particules selon l'invention, l'agent d'enrobage peut constituer une couche, continue ou non, disposée autour de la particule dont le coeur est constitué essentiellement de peroxyde de calcium mais il peut aussi servir de liant d'agglomération de particules fines élémentaires. Dans ce cas, chacune des particules fines élémentaires de peroxyde de calcium est entourée d'une couche, continue ou non, d'agent d'enrobage.

Par composé solide insoluble dans l'eau, on entend désigner les composés dont la solubilité dans l'eau est inférieure à 1%, en général inférieure à 0,1% et de préférence inférieure à 0,01% en poids et qui sont solides dans les conditions normales de température et de pression.

L'agent d'enrobage est en général constitué d'au moins 80% en poids du composé solide insoluble, le solde éventuel pouvant être constitué d'additifs divers dépendant entre autres de l'usage auquel sont destinées les particules. On peut ainsi ajouter des additifs permettant de réduire l'attrition ou des additifs ayant une incidence sur le pH.

Les composés solides insolubles présents dans les particules selon l'invention peuvent être choisis parmi les composés organiques et inorganiques.

En général les composés inorganiques sont choisis parmi les silicates, sulfates, aluminates, alumino-silicates, carbonates et phosphates de tous types tels que les phosphates classiques, les polyphosphates et plus particulièrement le tripolyphosphate et les métaphosphates, insolubles dans l'eau. Les sels de calcium conviennent bien. Parmi ceux-ci, les sels de calcium de tous les types de phosphates donnent de bons résultats.

Pour réaliser l'enrobage, les composés inorganiques sont souvent mis en oeuvre sous la forme de leurs sels alcalins qui sont leurs précurseurs. Une fois présents dans l'agent d'enrobage des particules de peroxyde de calcium, ils sont convertis au moins partiellement en les sels de calcium correspondants.

2

# 0 002 543

Les composés organiques peuvent être de natures très différentes. En général, on utilise des polymères insolubles dans l'eau. De façon avantageuse on met en oeuvre des polymères ayant de bonnes propriétés filmogènes qui présentent une perméabilité aux ions hydroxyles et hydroxonium certaine mais faible lorsqu'ils sont utilisés sous forme de films. Les polymères mis en oeuvre peuvent être des homo-ou des copolymères; on peut utiliser également des mélanges de polymères. Les polymères peuvent être choisis parmi les polymères vinyliques et les polymères de condensation. Parmi les polymères de condensation convenant bien, on peut mentionner les résines époxydes, les polyuréthanes, et les polyesters et polyamides insolubles. Parmi les polymères vinyliques, on peut mentionner plus particulièrement les polymères contenant des unités monomériques dérivées de monomères choisis parmi les oléfines mono- ou polyinsaturées substituées ou non par des substituants choisis parmi les atomes d'halogénes tels que le chlore et le fluor, et les groupes alkyles, aryles et cycloalkyles. Ces polymères peuvent être des homo- ou des copolymères. Dans ce dernier cas, ils peuvent en outre contenir des unités monomériques dérivées de monomères choisis parmi les oléfines substituées par des substituants choisis parmi les groupes hydroxyles, carbonitriles, carboxyles et carboxylates sels ou esters ainsi qu'éventuellement simultanément par des groupes alkyles ou aryles.

Les polymères vinyliques conviennent en général bien. Parmi ceux-ci les copolymères vinyliques se sont révélés avantageux et plus particulièrement les copolymères contenant des unités monomériques choisies parmi celles dérivées du chlorure de vinylidène, du styrène et du chlorure de vinyle. De bons résultats ont été obtenus avec les copolymères du chlorure de vinylidène avec au moins un comonomère choisi parmi l'éthylène, les acrylates et méthacrylates de métaux alcalins ou d'ammonium ou d'alkyle contenant de 1 à 4 atomes de carbone, les acides acrylique et méthacrylique, les nitriles acrylique et méthacrylique, l'alcool vinylique et le chlorure de vinyle, les copolymères du styrène avec au moins un comonomère choisi parmi les acides acrylique et méthacrylique, les acrylates et méthacrylates tels que définis ci-dessus, le butadiène et l'alcool vinylique et les copolymères du chlorure de vinyle avec l'alcool vinylique. Les meilleurs résultats ont été obtenus avec les copolymères du chlorure de vinylidène avec d'autres monomères et plus particulièrement avec le copolymère du chlorure de vinylidène avec l'acrylate de méthyle.

Dans le cas de l'utilisation comme agent d'enrobage de copolymères du chlorure de vinylidène avec l'acrylate de méthyle, ce dernier est en général présent dans le copolymère à raison de 1 à 50% et de préférence de 2 à 20% de son poids.

L'agent d'enrobage est en général présent à raison de 0,1 à 20% et de préférence de 0,2 à 10% du poids des particules.

Les particules de peroxyde de calcium enrobées contiennent en général de 8 à 20% et le plus souvent de 10 à 19% en poids d'oxygène actif.

Les particules de peroxyde de calcium peuvent contenir, outre l'agent d'enrobage de petites quantités d'additifs divers ne dépassant en général pas 10% de leur poids. Parmi ces additifs figurent notamment des stabilisants. Elles peuvent en outre contenir de petites quantités de carbonate de calcium ne dépassant en général pas 20% de leur poids.

Les particules de peroxyde de calcium selon l'invention peuvent avoir des dimensions très variables. Leur diamètre est en général supérieur à 0,01 mm. Le plus souvent, il est compris entre 0,01 et 50 mm. Comme il a été dit précédemment, les particules peuvent se présenter soit sous forme de granules dont la couche extérieure contient l'agent d'enrobage soit sous forme d'agglomérats de particules fines élémentaires liées entre elles par l'agent d'enrobage. Ces agglomérats peuvent avoir des formes quelconques telles que celles de pastilles, de tablettes et de comprimés.

Lorsque les particules de peroxyde de calcium selon l'invention se présentent sous forme d'agglomérats, elles peuvent être fabriquées par mélange à sec de particules fines de peroxyde de calcium et d'agent d'enrobage ou de son précurseur dans les proportions désirées. Le mélange à sec peut être réalisé dans n'importe quel mélangeur connu et est suivi par un compactage destiné à agglomérer les particules fines entre elles pour former les particules selon l'invention. A cet effet, on peut utiliser n'importe quel compacteur connu capable d'exercer une pression suffisante. De préférence, la pression exercée au cours du compactage est supérieure à 50 kg/cm². Des appareils convenant bien sont les pastilleuses et les compacteurs à cylindres. Après le compactage, on peut encore procéder à un broyage pour amener les particules aux dimensions désirées pour leur mise en oeuvre.

Une autre technique consiste à agglomérer les particules fines de peroxyde de calcium au moyen d'une solution ou d'une suspension de l'agent d'enrobage ou de ses précurseurs dans un solvant adéquat. Ce traitement peut être réalisé dans divers types d'appareils connus en eux-mêmes tels que des sécheurs en lit fluide ou des sécheurs à tambour.

Les particules fines utilisées dans les procédés d'agglomération ont en général un diamètre moyen compris entre 0,1 et 300 microns et le plus souvent entre 1 et 100 microns.

Selon un mode de réalisation préféré de l'invention, les particules de peroxyde de calcium se présentent sous forme de granules dont la couche extérieure contient l'agent d'enrobage. La présente invention concerne également un procédé pour la fabrication des particules de peroxyde de calcium de ce type.

Le procédé consiste à pulvériser sur des granules de peroxyde de calcium en mouvement une solution, une émulsion ou une suspension de l'agent d'enrobage ou de ses précurseurs dans un milieu liquide et à évaporer ledit milieu liquide.

Lorsque l'agent d'enrobage est un composé inorganique, il est en général mis en oeuvre sous forme d'une solution aqueuse d'un de ses précurseurs, de préférence le sel alcalin soluble correspondant.

Lorsque l'agent d'enrobage est un composé organique, de préférence un polymère selon la technique préférée, s'il est mis en oeuvre sous forme de solution dans un milieu liquide contenant un solvant ou un mélange de solvants de l'agent d'enrobage, la nature du ou des solvants choisis est fonction du polymère utilisé comme agent d'enrobage. Une liste de solvants adéquats pour les différents agents d'enrobage du procédé de l'invention est donnée dans le livre de J. Brandrup et E. H. Immergut, Polymer Handbook, Interscience. Parmi ces solvants on choisit de préférence ceux dont la température d'ébullition n'est pas trop élevée par rapport à la température de décomposition de l'agent d'enrobage. En général, on choisit des solvants dont la température d'ébullition ne dépasse pas 150°C sous une atmosphère.

Lorsque l'agent d'enrobage organique est mis en oeuvre sous forme d'émulsion ou de suspension dans un milieu liquide on préfère, pour des raisons économiques, utiliser l'eau comme constituant principal du milieu liquide. Il est bien entendu que d'autres milieux liquides peuvent également convenir.

De façon avantageuse l'agent d'enrobage organique est mis en oeuvre sous forme d'émulsion dans l'eau.

La concentration de l'agent d'enrobage organique ou inorganique ou de ses précurseurs dans le milieu liquide peut varier dans d'assez larges limites et est en général comprise entre 1 et 70% en poids du poids total de la phase liquide comprenant l'agent d'enrobage et le milieu liquide. On utilise de préférence une concentration aussi proche que possible de la concentration à laquelle on observe une séparation d'une phase solide dans les conditions de température utilisées sans toutefois atteindre des concentrations pour lesquelles la phase liquide est trop visqueuse pour pouvoir être mise en oeuvre. De préférence on utilise des concentrations telles que la viscosité de la phase liquide contenant l'agent d'enrobage ne dépasse pas 100 centipoises.

Il est bien entendu que le milieu liquide peut contenir divers additifs dont la concentration ne dépasse en général pas 20% de son poids et qui peuvent notamment être destinés à assurer la stabilité de la phase liquide. On peut ainsi avantageusement y ajouter des agents tensioactifs lorsque la phase liquide est une émulsion ou une suspension.

La phase liquide est mise en oeuvre en général à une température comprise entre la température ambiante et une température légèrement supérieure à celle des granules sur lesquelles elle est pulvérisée. En général la température de la phase liquide est comprise entre la température ambiante et la température des granules sur lesquelles elle est pulvérisée plus 25°C.

Les températures auxquelles on opère la pulvérisation et l'évaporation sont inférieures à la température de décomposition de l'agent d'enrobage et en général inférieures à 100°C. Pour l'évaporation on utilise en général des températures comprises entre 25 et 95°C.

La pulvérisation peut être réalisée selon différentes techniques par exemple en lit fluidisé, sur sole tournante, dans un tambour rotatif ou dans tout autre dispositif analogue connu en lui-même.

L'évaporation peut se faire en même temps et dans la même enceinte que la pulvérisation ou dans un appareil distinct. On opère en général selon un procédé en continu. Un dispositif tel qu'un lit fluide ou tout autre dispositif connu en lui-même peut convenir. Dans ce cas, la température du lit fluide est comprise entre 30 et 85°C.

L'utilisation d'un lit fluide s'est révélée particulièrement avantageuse, d'une part parce que la pulvérisation et l'évaporation peuvent être réalisées simultanément dans le même appareil et d'autre part parce que cette technique permet l'obtention d'un enrobage plus hermétique et plus homogène.

Comme gaz de fluidisation on peut utiliser n'importe quel gaz inerte et en particulier l'air. Ce gaz peut être chauffé pour maintenir la température du lit fluide à la valeur désirée. On peut aussi utiliser d'autres moyens de chauffage tels qu'un faisceau tubulaire placé dans le lit fluide.

On peut également opérer selon un procédé semblable mais en discontinu.

Les particules de peroxyde de calcium selon l'invention s'hydrolysent beucoup moins vite dans les eaux naturelles que le peroxyde de calcium non enrobé. La technique d'enrobage utilisée pour les préparer présente par ailleurs l'avantage de permettre l'application de l'agent d'enrobage tout en ne mettant en oeuvre que de faibles quantités d'agent enrobage ce qui permet d'obtenir un produit à teneur en oxygène actif élevée. D'autre part comme la quantité du milieu liquide contenant l'agent d'enrobage mise en oeuvre est faible, l'évaporation nécessite peu de calories.

La présente invention concerne également l'utilisation des particules selon l'invention pour le traitement des eaux. Ces particules conviennent tout particulièrement bien pour l'oxygénation d'eaux dans des conditions où il n'est pas possible d'effectuer l'oxygénation sous agitation. Elles peuvent avantageusement être disposées dans les filtres à eau potable. En général, on les met en oeuvre dans des proportions permettant d'assurer de 0,01 à 100 g d'oxygène actif par m$^3$ d'eau à traiter c'est-à-dire environ 0,05 à 1000 g de peroxyde de calcium par m$^3$ d'eau à traiter.

L'utilisation des particules selon l'invention pour le traitement des eaux potables présente de très

4

nombreux avantages. Elle permet de réduire fortement les fermentations qui apparaissent sur les filtres ce qui permet d'accroître leur durée de fonctionnement. En outre, lorsque les eaux contiennent des ions métalliques tels que par exemple des ions fer ou manganèse, ces derniers sont transformés en composés insolubles qui se séparent de l'eau sur les filtres. En outre, lorsque les eaux traitées sont légèrement acides la présence des particules selon l'invention permet en outre d'assurer l'équilibre calcique et carbonique des eaux après filtration.

Les particules selon l'invention peuvent également avantageusement être utilisées pour l'oxygénation de l'hypolimnion des lacs artificiels ou naturels utilisés comme réserves d'eau potable. En effet, la concentration en oxygène de cette couche inférieure des lacs est très faible et les procédés actuellement mis au point pour oxygéner l'hypolimnion ne sont pas satisfaisants soit parce qu'ils entraînent une agitation excessive et amènent en surface des éléments nutritifs instables qui provoquent des croissances d'algues de plus en plus importantes, soit parce qu'ils ne permettent pas d'assurer un oxygénation suffisante ce qui entraîne une stagnation de l'eau et l'apparition de phénomènes de putréfaction qui rendent rapidement l'eau impropre à la consommation.

Les particules selon l'invention peuvent également être utilisées pour éliminer le chlore et/ou l'hypochlorite en excès présents dans les eaux soumises à un traitement de chloration préalable.

Enfin, les particules selon l'invention peuvent également avantageusement être utilisées pour le traitement des eaux usées. Dans de cas, il est particulièrement intéressant de les introduire dans les décanteurs d'épuration des eaux usées pour éviter les fermentations putrides dans les boues des décanteurs tout en ne provoquant pas d'agitation qui nuirait à la décantation elle-même. Dans ce cas, on observe en outre une réduction sensible des durées de décantation.

Les particules selon l'invention présentent l'avantage de conserver leur activité pendant des temps assez longs lorsqu'elles sont utilisées pour oxygéner divers types d'eaux, tant potables que résiduaires même lorsque ces dernières ont des températures supérieures à la température ambiante.

Les exemples ci-après servent à mieux faire comprendre l'invention et à montrer les résultats remarquables obtenus lors de l'utilisation des agents d'enrobage selon l'invention sans toutefois limiter la portée de l'invention aux formes d'exécution décrites.

L'exemple A donne un mode de préparation des particules de peroxyde de calcium enrobées. Les exemples B et C mettent en évidence la réduction sensible de la vitesse d'hydrolyse de particules de peroxyde de calcium après enrobage.

## Exemples

*Procédé de fabrication des particules de peroxyde de calcium enrobées* (exemple A)

On met en oeuvre des granules de peroxyde de calcium fabriqués par réaction de peroxyde d'hydrogène sur de la chaux. Les granules utilisés ont une teneur en oxygène actif de 16,1%.

Les granules préformés ont été enrobés par un procédé discontinu en lit fluidisé

L'appareil utilisé consiste en un cylindre de 15 cm de diamètre et de 77 cm de hauteur, muni à sa base d'une plaque de répartition du gaz (trous de 2 mm), et muni d'un faisceau tubulaire pour chauffage par vapeur d'eau détendue à une pression effective de 1 kg/cm$^2$.

Initialement on introduit 3 kg de granules homogènes de peroxyde de calcium de dimensions comprises entre 1, 19 et 2,38 mm et de poids spécifique apparent par écoulement libre égal à 0,807 g/cm$^3$.

On fait passer de l'air par la plaque de répartition des gaz et on introduit, par un pulvérisateur pneumatique (gicleur) placé à la paroi à 11 cm du fond 250 g d'une émulsion aqueuse d'un copolymère de chlorure de vinylidène (91%) et d'acrylate de méthyle (9%) contenant 24% de matières séches. La température de l'émulsion enrobante est de 20 à 25°C.

La hauteur du lit est de 25 cm et sa température de 65 à 70°C.

Après introduction de l'émulsion enrobante, on soutire de l'appareil les particules de peroxyde de calcium enrobées.

Le produit obtenu contient 2% en poids d'enrobant; son poids spécifique apparent par écoulement libre est de 0,812 g/cm$^3$ et sa teneur en oxygène actif est de 15,8%.

*Cinétique de formation d'oxygène actif par hydrolyse du peroxyde de calcium* (Exemple B, essais 1R à 11)

Les essais 1R, 2R, 5R, 6R, 9R et 10R ont été réalisés à titre de comparaison avec du peroxyde de calcium non enrobé en poudre (essais 1R, 5R et 9R) ou en granules (essais 2R, 6R et 10R). Les essais 3, 4, 7, 8 et 11 ont été réalisés avec des particules de peroxyde de calcium selon l'invention enrobées au moyen de 2% (essais 3, 7 et 11) ou 5% (essais 4 et 8) d'un copolymère de chlorure de vinylidène et d'acrylate de méthyle selon le procédé décrit à l'exemple A.

L'hydrolyse du peroxyde de calcium a été réalisée dans un réacteur de 2 l équipé d'un agitateur mécanique, sous atmosphère d'azote en présence d'une solution réductrice tamponnée pour fixer le pH à des valeurs différentes. Après introduction d'une quantité définie de peroxyde de calcium dans le milieu on prélève au cours du temps des échantillons de 20 cm$^3$ de solution dans lesquels on dose l'oxygène actif libéré par iodométrie (solution 0 1N de thiosulfate).

## 0 002 543

*Essais à pH voisin de 2* (essais 1R, 2R, 3 et 4)

La solution réductrice est obtenue comme suit. A 1250 cm³ (essai 1R) ou 1500 cm³ (essais 2R, 3, 4) d'une solution 0,1N de sulfate ferreux dans l'acide sulfurique, on ajoute 200 g de $NaH_2PO_4$ et on complète à 2 1 par addition d'eau distillée. On introduit ensuite 7,322 g de peroxyde de calcium.

Les résultats obtenus sont rassemblés au Tableau 1 ci-après.

6

**0 002 543**

TABLEAU 1

Libération d'oxygène actif par hydrolyse de peroxyde de calcium
à pH 2 (2,1—2,4) en présence de sulfate ferreux

| CaO$_2$ | 1R | 2R | 3 | 4 |
|---|---|---|---|---|
| | poudre | granules 1,19—2,38 mm | particules enrobées à 2 % | particules enrobées à 5 % |
| 0 actif initial, mg | 975 | 1175 | 1150 | 1115 |
| 0 actif dégagé, mg après  0 min | 0 | 0 | 0 | 0 |
| 1 | 909,7 | | | |
| 2 | | 24,1 | | |
| 4 | | | 17,1 | 0 |
| 5 | 942 | | | |
| 8 | | 56,4 | | |
| 10 | 942 | | 17,1 | |
| 25 | 948,4 | | | |
| 30 | | 128,8 | | 0 |
| 60 | | 209,4 | 34,3 | |
| 85 | 954,8 | | | |
| 120 | | 306 | | 8,4 |
| 180 | | | 94,3 | |
| 210 | 954,8 | | | |
| 240 | | 443 | | 16,8 |
| 300 | 961,3 | | | |
| 320 | | 499,3 | 145,7 | |
| 420 | | | | 25,2 |
| 440 | | 563,7 | | |
| 1320 | | | 385,7 | |
| 1380 | | | | 218,2 |
| 1420 | | 676,5 | | |
| 1440 | | | 394,3 | |
| 1500 | | | | 243,3 |
| 1540 | | 684,5 | | |

7

*Essais à pH voisin de 8* (essais 5R, 6R, 7 et 8)

La solution réductrice est obtenue comme suit.

A 1250 cm$^3$ (essais 5R et 6R) ou 1500 cm$^3$ (essais 7 et 8) de solution 0,1N de $As_2O_3$ on ajoute $NaHCO_3$ en quantité en excès par rapport à la saturation et on complète à 2 l par addition d'eau distillée. On introduit ensuite 7,322 g de peroxyde de calcium.

Les résultats obtenus sont rassemblés au Tableau 2 ci-après.

TABLEAU 2

Libération d'oxygène actif par hydrolyse de peroxyde de calcium
à pH 8 (7,7—9) en présence de $As_2O_3$

| | 5R | 6R | 7 | 8 |
|---|---|---|---|---|
| $CaO_2$ | poudre | granules 1,19—2,38 mm | particules enrobées à 2 % | particules enrobées à 5 % |
| 0 actif initial, mg | 975 | 1175 | 1150 | 1115 |
| 0 actif dégagé, mg après    0 min | 0 | 0 | 0 | 0 |
| 1 | 791,1 | | | |
| 4 | | | 8 | |
| 5 | | 45,1 | | |
| 10 | | 64,5 | | |
| 12 | | | 8 | |
| 14 | 873,4 | | | |
| 16 | | | | 0 |
| 30 | 873,4 | 84 | | |
| 60 | | | 16,1 | |
| 120 | | 122 | | 0 |
| 135 | 936,7 | | | |
| 180 | | | 24,1 | |
| 195 | 949,4 | | | |
| 240 | | 142 | | |
| 300 | 955,7 | | 24,1 | 8,1 |
| 320 | | 155 | | |
| 420 | | 161,3 | 32,2 | |
| 480 | | | | 16,2 |
| 1320 | | | 48,3 | |
| 1350 | | 213 | | |
| 1380 | | | | 24,3 |
| 1560 | | 219,3 | | |
| 1680 | | 219,3 | | |
| 1830 | | 219,3 | | |

**0 002 543**

*Essais à pH voisin de 10* (essais 9R, 10R et 11)

La solution réductrice est obtenue comme suit.

A 1250 cm³ (essai 9R) ou 1500 cm³ (essais 10R et 11) de $As_2O_3$ 0,1N on ajoute 5 g de $Na_2B_4O_7$ ainsi que de l'hydroxyde de sodium 10N et de l'eau distillée pour amener à 2 1 et à pH 10. On introduit ensuite 7,322 g de peroxyde de calcium.

Les résultats obtenus sont rassemblés au Tableau 3 ci-après.

TABLEAU 3

Libération d'oxygène actif par hydrolyse de peroxyde de calcium
à pH 10 (9,9—10,4) en présence de $As_2O_3$

| $CaO_2$ | 9R | 10R | 11 |
|---|---|---|---|
| | poudre | granules 1,19—2,38 mm | particules enrobées à 2 % |
| 0 actif initial, mg | 975 | 1175 | 1150 |
| 0 actif dégagé, mg | | | |
| après 0 min | 0 | 0 | 0 |
| 1 | 425,8 | | |
| 4 | | 24,3 | |
| 7 | 716,1 | | |
| 10 | | | 0 |
| 15 | 800 | 40,5 | |
| 25 | 838,7 | | |
| 30 | | 56,7 | |
| 35 | 851,6 | | |
| 60 | | 64,8 | |
| 75 | 883,9 | | |
| 120 | | | 0 |
| 150 | 916,1 | | |
| 180 | | 81 | |
| 245 | 929 | | |
| 300 | | 97,3 | |
| 320 | 942 | | |
| 360 | | | 0 |
| 1240 | | | 8,3 |
| 1320 | | 121,6 | |

10

**0 002 543**

L'examen des tableaux 1, 2 et 3 montre que l'enrobage des particules de peroxyde de calcium selon l'invention permet de réduire très sensiblement la vitesse de libération d'oxygène actif quel que soit le pH envisagé.

*Cinétique de formation d'oxygène actif et d'oxygène moléculaire par hydrolyse du peroxyde de calcium (Exemple C, essais 12R à 20)*

Les essais 12R, 13R et 14R ont été réalisés à titre de comparaison avec du peroxyde de calcium en granules non enrobés. Les essais 15 à 20 ont été réalisés suivant l'invention avec des particules de peroxyde de calcium enrobées au moyen de 2% (essais 15 à 17) ou 5% (essais 18 à 20) du copolymère décrit à l'exemple A.

Les essais ont été réalisés à 24°C et à pH 8,5 dans un réacteur de 2 l équipé d'un agitateur mécanique sous atmosphère d'azote en présence d'une solution réductrice tamponnée contenant 777,5 cm$^3$ de $As_2O_3$ 0,1N complétés à 1 l et additionnés d'un excès de $NaHCO_3$ par rapport à la saturation. On introduit dans le réacteur 3,661 g de peroxyde de calcium et après un temps de fonctionnement donné on dose l'oxygène actif libéré par iodométrie (solution 0,1N de thiosulfate) et on dose l'oxygène actif encore présent dans les particules (oxygène actif résiduaire). Par différence on obtient l'oxygène moléculaire libéré. Les résultats obtenus sont rassemblés au Tableau 4.

11

TABLEAU 4

Oxygène actif et oxygène moléculaire libérés au cours de temps

| CaO$_2$ | granules 1,19–2,38 mm | | | particules enrobées à 2 % | | | particules enrobées à 5 % | | |
|---|---|---|---|---|---|---|---|---|---|
| 0 actif initial g/kg | 170 | | | 173 | | | 167 | | |
| | 0 actif libéré % | 0 actif résiduaire, % | O$_2$ moléculaire, % | 0 actif libéré % | 0 actif résiduaire, % | O$_2$ molécularie, % | 0 actif libéré % | 0 actif résiduaire, % | O$_2$ moléculaire, % |
| 5 heures | essai 12R | | | essai 15 | | | essai 18 | | |
| | 10,9 | 73 | 16,1 | 2,5 | 90 | 7,7 | 0,7 | 92,8 | 6,5 |
| 24 heures | essai 13R | | | essai 16 | | | essai 19 | | |
| | 15,4 | 41,5 | 43,1 | 3,8 | 73 | 23,2 | 2,0 | 89,3 | 8,7 |
| 3 jours | essai 14R | | | essai 17 | | | essai 20 | | |
| | 16,1 | 21,5 | 62,4 | 7,6 | 48,8 | 43,6 | 2,0 | 80,5 | 17,5 |

0 002 543

**0 002 543**

L'examen du tableau 4 montre une réduction sensible de l'hydrolyse du peroxyde de calcium en oxygène actif et en oxygène moléculaire après enrobage.

**Revendications**

1. Particules solides contenant du peroxyde de calcium, caractérisées en ce qu'elles sont enrobées au moyen d'un agent d'enrobage contenant un composé solide insoluble dans l'eau ayant un point de fusion d'au moins 50°C.

2. Particules solides selon la revendication 1, caractérisées en ce que le composé insoluble dans l'eau a une solubilité dans l'eau inférieure à 1% en poids.

3. Particules solides selon la revendication 1 ou 2, caractérisées en ce que le composé insoluble dans l'eau un composé inorganique.

4. Particules solides selon la revendication 3, caractérisées en ce que le composé inorganique est choisi parmi les silicates, sulfates, aluminates, alumino-silicates, carbonates, et phosphates insolubles dans l'eau.

5. Particules solides selon la revendication 4, caractérisées en ce que le phosphate est choisi parmi le tripolyphosphate et les métaphosphates.

6. Particules solides selon la revendication 4 ou 5, caractérisées en ce que le composé inorganique est choisi parmi les sels de calcium.

7. Particules solides selon la revendication 1 ou 2, caractérisées en ce que le composé insoluble dans l'eau est un polymère organique.

8. Particules solides selon la revendication 7, caractérisées en ce que le polymère est un polymère contenant des unités monomériques dérivées de monomères choisis parmi les oléfines mono- ou polyinsaturées substituées ou non par des substituants choisis parmi les atomes d'halogène tels que le chlore ou le fluor et les groupes alkyles, aryles et cycloalkyles.

9. Particules solides selon la revendication 8, caractérisées en ce que le polymère vinylique est un copolymère contenant des unités monomériques dérivées de monomères choisis parmi le chlorure de vinylidène, le styrène et le chlorure de vinyle.

10. Particules solides selon la revendication 9, caractérisées en ce que le polymère vinylique est un copolymère du chlorure de vinylidène avec l'acrylate de méthyle.

11. Particules solides selon l'une quelconque des revendications 1 à 10, caractérisées en ce qu'elles contiennent de 0,1 à 20% en poids d'agent d'enrobage.

12. Particules solides selon l'une quelconque des revendications 1 à 11, caractérisées en ce que l'agent d'enrobage se trouve sous la forme d'une couche extérieure.

13. Procédé pour l'obtention des particules solides selon l'une quelconque des revendications 1 à 12, caractérisé en ce qu'on pulvérise sur des granules de peroxyde de calcium en mouvement, une solution, une émulsion ou une suspension de l'agent d'enrobage ou de ses précurseurs dans un milieu liquide et en ce qu'on évapore ledit milieu liquide.

14. Procédé pour l'oxygénation des eaux, caractérisé en ce qu'on traite chaque m³ d'eau par 0,05 à 1000 g de peroxyde de calcium sous forme des particules solides selon l'une quelconque des revendications 1 à 12.

15. Procédé selon la revendication 14, caractérisé en ce qu'il est appliqué à l'oxygénation des eaux potables et en ce que les particules solides contenant du peroxyde de calcium sont disposées dans les filtres à eau potable.

16. Procédé selon la revendication 15, caractérisé en ce qu'il est appliqué à l'oxygénation des réserves d'eau potable.

17. Procédé selon la revendication 16, caractérisé en ce qu'il est appliqué à l'oxygénation des eaux contenant un agent de chloration choisi parmi le chlore et l'hypochlorite de sodium.

18. Procédé selon la revendication 17, caractérisé en ce qu'il est appliqué à l'oxygénation des eaux usées.

**Patentansprüche**

1. Feste, Kalziumperoxid enthaltende Teilchen, dadurch gekennzeichnet daß sie mit einem Umbüllungsmittel umhüllt sind, welches eine in Wasser unlösliche, feste Verbindung enthält mit einem Schmelzpunkt von mindestens 50°C.

2. Feste Teilchen gemäß Anspruch 1, dadurch gekennzeichnet, daß die in Wasser unlösliche Verbindung eine Wasserlöslichkeit unterhalb von 1 Gew.-% besitzt.

3. Feste Teilchen gemäß Anspruch 1 oder 2, dadurch gekennzeichnet, daß die in Wasser unlösliche Verbindung eine anorganische Verbindung ist.

4. Feste Teilchen gemäß Anspruch 3, dadurch gekennzeichnet, daß die in anorganische Verbindung ausgewählt ist unter den wasserunlöslichen Silikaten, Sulfaten, Aluminaten, Alumo-Silikaten, Carbonaten und Phosphaten.

5. Feste Teilchen gemäß Anspruch 4, dadurch gekennzeichnet, daß das Phosphat ausgewählt ist unter Tripolyphosphat und den Metaphosphaten

13

# 0 002 543

6. Feste Teilchen gemäß Anspruch 4 oder 5, dadurch gekennzeichnet, daß die anorganische Verbindung ausgewählt ist unter den Kalziumsalzen.

7. Feste Teilchen gemäß Anspruch 1 oder 2, dadurch gekennzeichnet, daß die in Wasser unlösliche Verbindung ein organisches Polymeres ist.

8. Feste Teilchen gemäß Anspruch 7, dadurch gekennzeichnet, daß das Polymere ein Polymer ist, welches Monomereinheiten enthält, abgeleitet von Monomeren ausgewählt unter den mono- oder mehrfach ungesättigten Olefinen, die gegebenenfalls substituiert sein können durch Substituenten ausgewählt unter den Halogenatomen, wie Chlor oder Fluor und den Alkylgruppen, Arylgruppen und Cycloalkylgruppen.

9. Feste Teilchen gemäß Anspruch 8, dadurch gekennzeichnet, daß das Vinylpolymere ein Copolymer ist, welches monomere Einheiten enthält, abgeleitet von Monomeren ausgewählt unter Vinylidenchlorid, Styrol und Vinylchlorid.

10. Feste Teilchen gemäß Anspruch 9, dadurch gekennzeichnet, daß das Vinylpolymere ein Copolymer des Vinylidenchlorids mit Methylacrylat ist.

11. Feste Teilchen gemäß einem der Ansprüche 1 bis 10, dadurch gekennzeichnet, daß sie 0,1 bis 20 Gew.-% des Umhüllungsmittels enthalten.

12. Feste Teilchen gemäß einem der Ansprüche 1 bis 11, dadurch gekennzeichnet, daß das Umhüllungsmittel in Form einer äußeren Schicht vorliegt.

13. Verfahren zur Herstellung von festen Teilchen gemäß einem der Ansprüche 1 bis 12, dadurch gekennzeichnet, daß man auf ein Kalsiumperoxidgranulat in Bewegung eine Lösung, eine Emulsion oder eine Suspension des Umhüllungsmittels oder eines Vorläufers in einem flüssigen Milieu aufpulverisiertund daß man das flüssige Milieu verdampft.

14. Verfahren zur Sauerstoffbehandlung von Wasser, dadurch gekennzeichnet, daß man Wasser je Kubikmeter mit 0,05 bis 1000 g Kalziumperoxid in Form der festen Teilchen gemäß einem der Ansprüche 1 bis 12 behandelt.

15. Verfahren gemäß Anspruch 14, dadurch gekennzeichnet, daß es auf die Sauerstoffbehandlung von Trinkwasser angewandt wird und daß die Kalziumperoxid enthaltenden festen Teilchen in Trinkwasserfiltern angeordnet sind.

16. Verfahren gemäß Anspruch 15, dadurch gekennzeichnet, daß es angewandt wird auf die Sauerstoffbehandlung von Trinkwasserreserven.

17. Verfahren gemäß Anspruch 16, dadurch gekennzeichnet, daß es angewandt wird auf die Sauerstoffbehandlung von Wasser, welches ein Chlorierungsmittel, ausgewählt unter Chlor und Natriumhypochlorit enthält.

18. Verfahren gemäß Anspruch 17, dadurch gekennzeichnet, daß es angewandt wird auf die Sauerstoffbehandlung von gebrauchtem Wasser.

## Claims

1. Solid particles containing calcium peroxide, characterised in that they are coated by means of a coating agent containing a water-insoluble solid compound having a melting point of at least 50°C.

2. Solid particles according to Claim 1, characterised in that the water-insoluble compound has a solubility in water of less than 1% by weight.

3. Solid particles according to Claim 1 or 2, characterised in that the water-insoluble compound is an inorganic compound.

4. Solid particles according to Claim 3, characterised in that the inorganic compound is chosen from amongst water-insoluble silicates, sulphates, aluminates, alumino-silicates, carbonates and phosphates.

5. Solid particles according to Claim 4, characterised in that the phosphate is chosen from amongst tripolyphosphate and metaphosphates.

6. Solid particles according to Claim 4 or 5, characterised in that the inorganic compound is chosen from amongst calcium salts.

7. Solid particles according to Claim 1 or 2, characterised in that the water-insoluble compound is an organic polymer.

8. Solid particles according to Claim 7, characterised in that the polymer is a polymer containing monomeric units derived from monomers chosen from amongst monosaturated or polyunsaturated olefines which are unsubstituted or substituted by substituents chosen from amongst halogen atoms, such as chlorine or fluorine, and alkyl, aryl and cycloalkyl groups.

9. Solid particles according to Claim 8, characterised in that the vinyl polymer is a copolymer containing monomeric units derived from monomers chosen from amongst vinylidene chloride, styrene and vinyl chloride.

10. Solid particles according to Claim 9, characterised in that the vinyl polymer is a copolymer of vinylidene chloride with methyl acrylate.

11. Solid particles according to any one of Claims 1 to 10, characterised in that they contain from 0.1 to 20% by weight of coating agent.

14

12. Solid particles according to any one of Claims 1 to 11, characterised in that the coating agent is in the form of an outer layer.

13. Process for the manufacture of the solid particles according to any one of Claims 1 to 12, characterised in that a solution, an emulsion or a suspension of the coating agent, or of its precursors, in a liquid medium is sprayed onto moving calcium peroxide granules, and in that the said liquid medium is evaporated off.

14. Process for the oxygenation of waters, characterised in that each $m^3$ of water is treated with 0.05 to 1,000 g of calcium peroxide in the form of the solid particles according to any one of Claims 1 to 12.

15. Process according to Claim 14, characterised in that it is applied to the oxygenation of drinking waters, and in that the solid particles containing calcium peroxide are arranged in the filters for drinking water.

16. Process according to Claim 15, characterised in that it is applied to the oxygenation of drinking water supplies.

17. Process according to Claim 16, characterised in that it is applied to the oxygenation of waters containing a chlorinating agent chosen from amongst chlorine and sodium hypochlorite.

18. Process according to Claim 17, characterised in that it is applied to the oxygenation of waste waters.